# EUROPÄISCHE PATENTANMELDUNG

(11) **EP 4 092 005 A1**
(43) Veröffentlichungstag der Anmeldung: **23.11.2022**
(21) Anmeldenummer: 21174737.3
(22) Anmeldetag: 19.05.2021
(51) Int. Cl.: C04B 28/04, C04B 28/06, C04B 28/12

(54) **TROCKENMÖRTELVORPRODUKT, TROCKENMÖRTEL, WÄSSRIGE BESCHICHTUNGSMASSE, ENTHALTEND DEN TROCKENMÖRTEL, BESCHICHTUNG AUS DER WÄSSRIGEN BESCHICHTUNGSMASSE, WÄRMEDÄMMVERBUNDSYSTEM, ENTHALTEND DIE BESCHICHTUNG, UND VERWENDUNG DER BESCHICHTUNGSMASSE**

(71) Anmelder: DAW SE, 64372 Ober-Ramstadt (DE)
(72) Erfinder: Fleischmann, Konstantin, 99817 Eisenach (DE); Stark, Heiko, 99837 Werra-Suhl-Tal (DE); Hurnaus, Thomas, 84550 Feichten (DE)
(74) Vertreter: Metten, Karl-Heinz

(57) **Zusammenfassung**

Die vorliegende Erfindung betrifft ein Trockenmörtelvorprodukt, enthaltend a) Zement, b) Calcium-Dihydrat, Calciumsulfat-Anhydrit und/oder Calciumsulfat-Hemihydrat, c) Calciumhydroxid, d) gegebenenfalls Aluminiumhydroxid und/oder Calciumaluminatzement und/oder Calciumsulfoaluminatzement, e) mindestens ein polymeres organisches Bindemittel, f) mindestens einem Verdicker, g) gegebenenfalls mindestens ein Hydrophobierungsmittel und h) einen Durchtrocknungs- und Aushärtungsbeschleuniger oder eine Durchtrocknungs- und Aushärtungsbeschleunigermischung. Ferner betrifft die Erfindung einen Trockenmörtel, enthaltend das Trockenmörtelvorprodukt sowie i) mindestens einen Füllstoff und gegebenenfalls j) mindestens einen Leichtfüllstoff. Außerdem betrifft die Erfindung eine wässrige Beschichtungsmasse enthaltend den Trockenmörtel und Wasser sowie eine Beschichtung erhalten durch Aufbringen der Beschichtungsmasse auf eine Substratoberfläche und ein beschichtetes Substrat erhalten durch Behandeln eines Substrats mit der wässrigen Beschichtungsmasse. Schließlich betrifft die Erfindung die Verwendung des Trockenmörtelvorprodukts, des Trockenmörtels oder der Beschichtungsmasse als Klebe- und/oder Armierungsmasse oder für die Herstellung von Fertighäusern oder von Bestandteilen hiervon.

## Beschreibung

Die vorliegende Erfindung betrifft ein Trockenmörtelvorprodukt sowie einen Trockenmörtel. Ferner betrifft die Erfindung eine wässrige Beschichtungsmasse, enthaltend den erfindungsgemäßen Trockenmörtel, sowie eine Beschichtung, erhalten oder erhältlich durch Aufbringen der erfindungsgemäßen Beschichtungsmasse. Außerdem betrifft die Erfindung ein Wärmedämmverbundsystem, enthaltend die erfindungsgemäße Beschichtung, sowie die Verwendung der erfindungsgemäßen Beschichtungsmasse als Klebe- und/oder Armierungsmasse.

Trockenmörtel sind seit Langem als kommerzielle Produkte bekannt, was z.B. die österreichische Patentschrift AT 69633 und das US-Patent US 1,521,967 belegen. Trockenmörtel enthalten im Allgemeinen als Bindemittel Portlandzement. Derartige Trockenmörtel erhärten insbesondere bei Temperaturen unterhalb von 20 °C stark verzögert, was für viele Anwendungen abträglich ist, bei denen es auf kurze Zykluszeiten ankommt. Diesem Problem kann man nicht selten durch die Zugabe von sogenannten Beschleunigern wie Calciumformiat beikommen, muss dann jedoch ein verschlechtertes Verarbeitungsverhalten in Kauf nehmen. Wird Calciumaluminatzement mitverwendet, erhärtet Portlandzement häufig zu schnell, so dass Verzögerer hinzugefügt werden müssen. Diese sehr komplexen, zumeist auch teuren Trockenmörtelmischungen sind allerdings nicht selten sehr temperaturempfindlich und nicht unbedingt lagerstabil.

Bekannte Trockenmörtel lassen noch stets Wünsche offen. Der vorliegenden Erfindung hat daher die Aufgabe zugrunde gelegen, Trockenmörtel verfügbar zu machen, die nicht mehr mit den Nachteilen des Stands der Technik behaftet sind und die sich insbesondere durch eine schnelle Erhärtung auszeichnen, vorzugsweise ohne Nachteile beim Verarbeitungsverhalten in Kauf nehmen zu müssen. Alternativ sowie insbesondere zusätzlich hat der Erfindung die Aufgabe zugrunde gelegen, Trockenmörtel verfügbar zu machen, der, insbesondere wenn gleichzeitig schnell erhärtend, weniger temperaturempfindlich ist als herkömmliche Trockenmörtel und/oder, insbesondere und, sich durch eine ausgeprägte Lagerstabilität auszeichnet.

Demzufolge wurde ein Trockenmörtelvorprodukt gefunden, enthaltend oder bestehend aus a) Zement, insbesondere Zement gemäß DIN EN 197-1:2011-11, b) Calcium-Dihydrat, Calciumsulfat-Anhydrit und/oder Calciumsulfat-Hemihydrat, insbesondere Calciumsulfat-Anhydrit und/oder Calciumsulfat-Hemihydrat, c) Calciumhydroxid, d) gegebenenfalls Aluminiumhydroxid und/oder Calciumaluminatzement und/oder Calciumsulfoaluminatzement, insbesondere Aluminiumhydroxid, e) mindestens einem polymeren organischen Bindemittel, f) mindestens einem Verdicker, insbesondere Celluloseether-Verdicker, g) gegebenenfalls mindestens einem Hydrophobierungsmittel und h) einem Durchtrocknungs- und Aushärtungsbeschleuniger oder insbesondere einer Durchtrocknungs- und Aushärtungsbeschleunigermischung. Dieses Trockenmörtelvorprodukt im Sinne der Erfindung enthält bevorzugt im Wesentlichen keine, insbesondere keine, silikatischen Füllstoffe, insbesondere im Wesentlichen keine Füllstoffe und im Wesentlichen keine Leichtfüllstoffe oder keine Füllstoffe und keine Leichtfüllstoffe.

Die der Erfindung zugrunde liegende Aufgabe wird besonders gut gelöst durch erfindungsgemäße Trockenmörtelvorprodukte enthaltend oder besteht aus
a) 15 bis 95 Gewichtsprozent, bevorzugt 15 bis 85 Gewichtsprozent und besonders bevorzugt 40 bis 75 Gewichtsprozent, Zement, insbesondere Zement gemäß DIN EN 197-1:2011-11,
b) 1 bis 20 Gewichtsprozent, bevorzugt 2 bis 15 Gewichtsprozent und besonders bevorzugt 3 bis 12 Gewichtsprozent, Calcium-Dihydrat, Calciumsulfat-Anhydrit und/oder Calciumsulfat-Hemihydrat, insbesondere Calciumsulfat-Anhydrit und/oder Calciumsulfat-Hemihydrat,
c) 4 bis 40 Gewichtsprozent, bevorzugt 6 bis 30 Gewichtsprozent und besonders bevorzugt 7 bis 25 Gewichtsprozent, Calciumhydroxid,
d) 0 bis 5 Gewichtsprozent, insbesondere 0,1 bis 2 Gewichtsprozent, Aluminiumhydroxid und/oder Calciumaluminatzement und/oder Calciumsulfoaluminatzement,
e) 2 bis 20 Gewichtsprozent, bevorzugt 3 bis 15 Gewichtsprozent, jeweils bezogen auf den Feststoffanteil, an mindestens einem polymeren organischen Bindemittel,
f) 0,1 bis 3 Gewichtsprozent, bevorzugt 0,3 bis 2,0 Gewichtsprozent, an mindestens einem Verdicker, insbesondere Celluloseether-Verdicker,
g) 0 bis 2,5 Gewichtsprozent, bevorzugt 0,1 bis 1,5 Gewichtsprozent, an mindestens einem Hydrophobierungsmittel und
h) 0,5 bis 6 Gewichtsprozent, bevorzugt 1,0 bis 4,5 Gewichtsprozent, an einem Durchtrocknungs- und Aushärtungsbeschleuniger oder einer Durchtrocknungs- und Aushärtungsbeschleunigermischung,
wobei die das Trockenmörtelvorprodukt bildenden Komponenten stets 100,0 Gewichtsprozent ergeben.

In einer bevorzugten Ausführungsform enthält oder besteht, insbesondere besteht, das Trockenmörtelvorprodukt aus
a) 15 bis 95 Gewichtsprozent, bevorzugt 15 bis 85 Gewichtsprozent und besonders bevorzugt 40 bis 75 Gewichtsprozent, Zement, insbesondere Zement gemäß DIN EN 197-1:2011-11,
b) 1 bis 20 Gewichtsprozent, bevorzugt 2 bis 15 Gewichtsprozent und besonders bevorzugt 3 bis 12 Gewichtsprozent, Calcium-Dihydrat, Calciumsulfat-Anhydrit und/oder Calciumsulfat-Hemihydrat, insbesondere Calciumsulfat-Anhydrit und/oder Calciumsulfat-Hemihydrat,
c) 4 bis 40 Gewichtsprozent, bevorzugt 6 bis 30 Gewichtsprozent und besonders bevorzugt 7 bis 25 Gewichtsprozent, Calciumhydroxid,
d) 0,1 bis 5 Gewichtsprozent, insbesondere 0,1 bis 2 Gewichtsprozent, Aluminiumhydroxid und/oder Calciumaluminatzement und/oder Calciumsulfoaluminatzement,
e) 2 bis 20 Gewichtsprozent, bevorzugt 3 bis 15 Gewichtsprozent, jeweils bezogen auf den Feststoffanteil, an mindestens einem polymeren organischen Bindemittel,
f) 0,1 bis 3 Gewichtsprozent, bevorzugt 0,3 bis 2,0 Gewichtsprozent, an mindestens einem Verdicker, insbesondere Celluloseether-Verdicker,
g) 0 bis 2,5 Gewichtsprozent, bevorzugt 0,1 bis 1,5 Gewichtsprozent, an mindestens einem Hydrophobierungsmittel und
h) 0,5 bis 6 Gewichtsprozent, bevorzugt 1,0 bis 4,5 Gewichtsprozent, an einem Durchtrocknungs- und Aushärtungsbeschleuniger oder einer Durchtrocknungs- und Aushärtungsbeschleunigermischung,
wobei die das Trockenmörtelvorprodukt bildenden Komponenten stets 100,0 Gewichtsprozent ergeben.

Calciumaluminatzement und Calciumsulfoaluminatzement sind kein Zement gemäß Komponente a) im Sinne der Erfindung.

Das erfindungsgemäße Trockenmörtelvorprodukt enthält bevorzugt im Wesentlichen keine, insbesondere keine, silikatischen Füllstoffe, insbesondere im Wesentlichen keine Füllstoffe oder keine Füllstoffe. Ganz besonders bevorzugt enthält das erfindungsgemäße Trockenmörtelvorprodukt keine Füllstoffe und keine Leichtfüllstoffe. Demgemäß ist im Sinne der Erfindung ein erfindungsgemäßes Trockenmörtelvorprodukt in einer besonders zweckmäßigen Ausgestaltung frei von Füllstoffen und frei von Leichtfüllstoffen. Das erfindungsgemäße Trockenmörtelvorprodukt kann als Vormischung hergestellt, transportiert und gelagert werden. Durch Vermischen mit mindestens einem Füllstoff und gegebenenfalls mindestens einem Leichtfüllstoff, z.B. am Ort der eigentlichen Verwendung, erhält man den erfindungsgemäßen Trockenmörtel.

Demgemäß wird die der Erfindung zugrunde liegenden Aufgabe auch gelöst durch einen Trockenmörtel, enthaltend oder bestehend aus a) Zement, insbesondere Zement gemäß DIN EN 197-1:2011-11, b) Calciumsulfat-Dihydrat, Calciumsulfat-Anhydrit und/oder Calciumsulfat-Hemihydrat, insbesondere Calciumsulfat-Anhydrit und/oder Calciumsulfat-Hemihydrat, c) Calciumhydroxid, d) gegebenenfalls Aluminiumhydroxid und/oder Calciumaluminatzement und/oder Calciumsulfoaluminatzement, insbesondere Aluminiumhydroxid, e) mindestens einem polymeren organischen Bindemittel, f) mindestens einem Verdicker, insbesondere Celluloseether-Verdicker, g) gegebenenfalls mindestens einem Hydrophobierungsmittel, h) einem Durchtrocknungs- und Aushärtungsbeschleuniger oder einer Durchtrocknungs- und Aushärtungsbeschleunigermischung und i) mindestens einem Füllstoff sowie j) gegebenenfalls mindestens einem Leichtfüllstoff.

Besonders gut wird die der Erfindung zugrunde liegenden Aufgabe auch gelöst durch einen Trockenmörtel, enthaltend oder bestehend aus
a) 5 bis 40 Gewichtsprozent, bevorzugt 15 bis 30 Gewichtsprozent, Zement, insbesondere Zement gemäß DIN EN 197-1:2011-11,
b) 0,5 bis 5 Gewichtsprozent, bevorzugt 1 bis 3 Gewichtsprozent, Calciumsulfat-Dihydrat, Calciumsulfat-Anhydrit und/oder Calciumsulfat-Hemihydrat, insbesondere Calciumsulfat-Anhydrit und/oder Calciumsulfat-Hemihydrat,
c) 0,5 bis 14 Gewichtsprozent, bevorzugt 1,0 bis 12 Gewichtsprozent und besonders bevorzugt 2,0 bis 10 Gewichtsprozent, Calciumhydroxid
d) 0 bis 1 Gewichtsprozent, bevorzugt 0,05 bis 0,5 Gewichtsprozent, Aluminiumhydroxid und/oder Calciumaluminatzement und/oder Calciumsulfoaluminatzement, insbesondere Aluminiumhydroxid,
e) 0,5 bis 8 Gewichtsprozent, bevorzugt 1 bis 5 Gewichtsprozent, jeweils bezogen auf den Feststoffanteil, an mindestens einem polymeren organischen Bindemittel,
f) 0,05 bis 1,0 Gewichtsprozent, bevorzugt 0,1 bis 0,7 Gewichtsprozent, an mindestens einem Verdicker,
g) 0,05 bis 0,8 Gewichtsprozent, bevorzugt, 0,1 bis 0,6 Gewichtsprozent, an mindestens einem Hydrophobierungsmittel,
h) 0,2 bis 1,6 Gewichtsprozent, bevorzugt 0,5 bis 1,2 Gewichtsprozent, an einem Durchtrocknungs- und Aushärtungsbeschleuniger oder einer Durchtrocknungs- und Aushärtungsbeschleunigermischung und
i) 35 bis 80 Gewichtsprozent, bevorzugt 45 bis 75 Gewichtsprozent, an mindestens einem Füllstoff sowie
j) 0 bis 20 Gewichtsprozent, bevorzugt 3 bis 15 Gewichtsprozent, an mindestens einem Leichtfüllstoff,
wobei die den Trockenmörtel bildenden Komponenten stets 100,0 Gewichtsprozent ergeben.

In einer bevorzugten Ausführungsform enthält oder besteht, insbesondere besteht, der erfindungsgemäße Trockenmörtel aus
a) 5 bis 40 Gewichtsprozent, bevorzugt 15 bis 30 Gewichtsprozent, Zement, insbesondere Zement gemäß DIN EN 197-1:2011-11,
b) 0,5 bis 5 Gewichtsprozent, bevorzugt 1 bis 3 Gewichtsprozent, Calciumsulfat-Dihydrat, Calciumsulfat-Anhydrit und/oder Calciumsulfat-Hemihydrat, insbesondere Calciumsulfat-Anhydrit und/oder Calciumsulfat-Hemihydrat,
c) 0,5 bis 14 Gewichtsprozent, bevorzugt 1,0 bis 12 Gewichtsprozent und besonders bevorzugt 2,0 bis 10 Gewichtsprozent, Calciumhydroxid,
d) 0,05 bis 1 Gewichtsprozent, bevorzugt 0,05 bis 0,5 Gewichtsprozent, Aluminiumhydroxid und/oder Calciumaluminatzement und/oder Calciumsulfoaluminatzement, insbesondere Aluminiumhydroxid,
e) 0,5 bis 8 Gewichtsprozent, bevorzugt 1 bis 5 Gewichtsprozent, jeweils bezogen auf den Feststoffanteil, an mindestens einem polymeren organischen Bindemittel,
f) 0,05 bis 1,0 Gewichtsprozent, bevorzugt 0,1 bis 0,7 Gewichtsprozent, an mindestens einem Verdicker,
g) 0,05 bis 0,8 Gewichtsprozent, bevorzugt, 0,1 bis 0,6 Gewichtsprozent, an mindestens einem Hydrophobierungsmittel,
h) 0,2 bis 1,6 Gewichtsprozent, bevorzugt 0,5 bis 1,2 Gewichtsprozent, an einem Durchtrocknungs- und Aushärtungsbeschleuniger oder einer Durchtrocknungs- und Aushärtungsbeschleunigermischung und
i) 35 bis 80 Gewichtsprozent, bevorzugt 45 bis 75 Gewichtsprozent, an mindestens einem Füllstoff sowie
j) 0 bis 20 Gewichtsprozent, bevorzugt 3 bis 15 Gewichtsprozent, an mindestens einem Leichtfüllstoff,
wobei die den Trockenmörtel bildenden Komponenten stets 100,0 Gewichtsprozent ergeben.

Solche erfindungsgemäßen Trockenmörtelvorprodukte und erfindungsgemäßen Trockenmörtel sind regelmäßig bevorzugt, bei denen der Zement Portlandzement der Festigkeitsklasse CEM I 42,5 oder CEM I 52,5, jeweils gemäß DIN EN 197-1:2011-11, insbesondere Portlandzement vom N-Typ oder vom R-Typ, jeweils gemäß DIN EN 197-1:2011-11, umfasst oder darstellt. Anstelle von Portlandzement (CEM I) sowie insbesondere zusätzlich zu Portlandzement können als Zemente z.B. auch Portlandkompositzement (CEM II), Hochofenzement (CEM III), Puzzolanzement (CEM IV) und/oder Kompositzement (CEM V) zum Einsatz kommen.

Geeignete Portlandzemente umfassen sowohl Grauzemente wie auch Weißzemente, diese können einzeln oder auch als Mischung vorliegen.

Ferner ist es darüber hinaus möglich, auf Zemente mit den Festigkeitsklassen 22,5 und/oder 32,5, jeweils gemäß DIN EN 197-1:2011-11, zurückzugreifen, wobei allerdings Zemente mit den Festigkeitsklassen 42,5 und 52,5 bevorzugt sind.

Bevorzugt unter geeigneten Zementen sind solche mit der Anfangsfestigkeit "N" ("Normal") oder "R" ("Rapid"), jeweils gemäß DIN EN 197-1:2011-11. Allerdings kommen grundsätzlich auch Zemente mit der Anfangsfestigkeit "L" ("Low"), gemäß DIN EN 197-1:2011-11, in Betracht.

Unter den erfindungsgemäßen Trockenmörtelvorprodukten und den erfindungsgemäßen Trockenmörteln sind solche bevorzugt, bei denen die Komponente b) Calciumsulfat-Hemihydrat und/oder Calciumsulfat-Anhydrit, z.B. Calciumsulfat-Hemihydrat und Calciumsulfat-Anhydrit, aufweist. Wird den erfindungsgemäßen Trockenmörtelvorprodukten und den erfindungsgemäßen Trockenmörteln ausschließlich Calciumsulfat-Anhydrit zugesetzt, schließt dies im Allgemeinen nicht aus, dass darin gleichwohl Calcium-Dihydrat und/oder Calciumsulfat-Hemihydrat vorliegen können. Denn im Handel erhältliche Zemente enthalten nicht selten in geringen Mengen Calcium-Dihydrat und/oder Calciumsulfat-Hemihydrat. Darüber hinaus können im Handel erhältliche Zemente alternativ oder zusätzlich auch bereits geringe Mengen an Calciumsulfat-Anhydrit enthalten. In einer ebenfalls zweckmäßigen Ausführungsform können demgemäß erfindungsgemäße Trockenmörtelvorprodukte und erfindungsgemäße Trockenmörtel im Wesentlichen kein, insbesondere kein, Calciumsulfat-Hemihydrat und/oder Calciumsulfat-Dihydrat, insbesondere kein Calciumsulfat-Hemihydrat und kein Calciumsulfat-Dihydrat, aufweisen. Als Komponente b) liegt dann im Wesentlichen nur bzw. nur Calciumsulfat-Anhydrit vor.

Unter den erfindungsgemäßen Trockenmörtelvorprodukten und unter den erfindungsgemäßen Trockenmörteln haben sich solche als besonders geeignet erwiesen, bei denen das Hydroxid der Komponente c) Calciumhydroxid umfasst, insbesondere hieraus besteht. Insbesondere auch über die Anwesenheit von Calciumhydroxid in den erfindungsgemäßen Trockenmörtelvorprodukten und in den erfindungsgemäßen Trockenmörteln kann der Beginn der Durchtrocknung bzw. Erhärtung der aus diesen Produkten gewonnenen Beschichtungsmasse wirksam gesteuert werden. Werden als Zemente Weißzemente eingesetzt, wurde überraschend gefunden, dass bei Mitverwendung von Aluminiumhydroxid, Calciumaluminatzement und/oder Calciumsulfoaluminatzement (Komponente d)), insbesondere von Aluminiumhydroxid, eine noch ausgeprägtere Durchtrocknung der aus den erfindungsgemäßen Beschichtungsmassen erhaltenen Beschichtungen gelingt und dass diese Beschichtungen über eine besonders ausgeprägte mechanische Festigkeit verfügen. Werden als Zemente Grauzemente eingesetzt, kann regelmäßig auf den Zusatz von Aluminiumhydroxid, Calciumaluminatzement und/oder Calciumsulfoaluminatzement, insbesondere von Aluminiumhydroxid, Calciumaluminatzement und Calciumsulfoaluminatzement, verzichtet werden.

Das polymere organische Bindemittel des erfindungsgemäßen Trockenmörtelvorprodukts oder des erfindungsgemäßen Trockenmörtels stellt für viele Ausführungsformen ein Bindemittel auf, insbesondere hydrophobierter, Pulverbasis oder auf wässriger Dispersionsbasis dar, wobei Bindemittel auf Pulverbasis bevorzugt sind und wobei besonders bevorzugt auf Bindemittel auf hydrophobierter Pulverbasis zurückgegriffen wird. Dabei können polymere organische Bindemittel insbesondere ausgewählt werden aus der Gruppe bestehend aus Vinylacetat-Copolymeren, insbesondere Vinylacetat/Ethylen-Copolymeren, Vinylversatat/Ethylen-Copolymeren und/oder Vinylacetat/Ethylen/Vinylversatat-Copolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, Hybridbindemitteln, insbesondere in Form wässriger Organosilikat-Hybriddispersionen, und beliebigen Mischungen hiervon. Unter den geeigneten polymeren organischen Bindemitteln wird bevorzugt auf Vinylacetat/Ethylen-Copolymere und/oder Vinylversatat/Ethylen-Copolymere, insbesondere Vinylacetat/Ethylen-Copolymere, zurückgegriffen.

Verdicker für das erfindungsgemäße Trockenmörtelvorprodukt oder den erfindungsgemäßen Trockenmörtel können insbesondere ausgewählt werden aus der Gruppe bestehend aus Polyacrylat-Verdickern, Polyacrylamid-Verdicker, Polyurethan-Verdickern, Polyharnstoff-Verdickern, Polyvinylalkohol-Verdickern, Polyetherpolyol-Verdickern, organisch modifizierten Schichtsilikat-Verdickern, nicht organisch modifizierten Schichtsilikat-Verdickern, Stärkeether-Verdickern, Celluloseether-Verdickern, Polysaccharid-Verdickern, bevorzugt Xanthan, Verdicker für die Fettalkoholethoxylat-Verdickern und beliebigen Mischungen hiervon, wobei Celluloseether-Verdickern bevorzugt sind. Geeignete Celluloseether-Verdicker umfassen dabei insbesondere Hydroxypropylmethylcellulose, Methylcellulose, Hydroxyethylcellulose, Carboxymethylcellulose, Methylhydroxyethylcellulose, Methylhydroxypropylcellulose oder deren beliebige Mischungen, insbesondere Methylhydroxyethylcellulose und/oder Methylhydroxypropylcellulose. Unter den Schichtsilikat-Verdickern sind die organisch modifizierten Schichtsilikat-Verdicker bevorzugt.

Hydrophobierungsmittel für das erfindungsgemäße Trockenmörtelvorprodukt oder den erfindungsgemäßen Trockenmörtel können vorzugsweise Fettsäuren, insbesondere gesättigte unverzweigte C₁₀- bis C₃₀-Fettsäuren, und/oder die Alkali-, Erdalkali-, Aluminium- und/oder Zinksalze, insbesondere die Zink-, Alkali- und/oder Erdalkalisalze von Fettsäuren, insbesondere gesättigte unverzweigte C₁₀- bis C₃₀-Fettsäuren, Silikonharze, insbesondere Alkylsilsesquioxane und/oder Polydialkylsiloxan, umfassen oder hieraus bestehen. Die Alkali-, Erdalkali-, Aluminium- und Zinksalze von Fettsäuren werden häufig auch als die Alkali-, Erdalkali-, Aluminium- bzw. Zinkseifen bezeichnet.

Durchtrocknungs- und Aushärtungsbeschleuniger im Sinne der Erfindung sind solche Verbindungen, die den Prozess der Bildung von Ettringit (auch Calciumsulfoaluminat genannt), das bei der Umsetzung von Zement mit Wasser im Allgemeinen spontan entsteht, verlangsamen, mit anderen Worten die Bildung von Ettringitkristallen jedenfalls anfänglich verzögern. Ohne an eine Theorie gebunden zu sein, wird vermutet, dass hierdurch letztendlich mehr und gegebenenfalls auch größere Ettringitkristalle gebildet werden bzw. zur Verfügung stehen, wodurch der wässrigen Mörtelmasse über einen kürzeren Zeitraum größere Wassermengen entzogen werden. Pro Ettringiteinheit werden 32 Wassermoleküle als Reaktions- und Kristallwasser gebunden. Nach der in der Bauchemie üblichen Schreibweise lautet die oxidische Summenformel von Ettringit 3CaO · Al₂O₃ · ₃CaSO₄ · 32H₂O, wobei die chemische Zusammensetzung auch wie folgt wiedergegeben wird Ca₆Al₂[(OH)₁₂(SO₄)₃]·26 H₂O. Es wird vermutet, erneut ohne an eine Theorie gebunden zu sein, dass, indem größere Mengen an Wasser bei Verwendung der Durchtrocknungs- und Aushärtungsbeschleuniger chemisch gebunden werden, eine zügigere und gleichmäßigere Durchtrocknung über die gesamte erfindungsgemäße Mörtelmasse gelingt. Ferner wird vermutet, erneut ohne an eine Theorie gebunden zu sein, dass mit einem Mehr an gebildeten Ettringitkristallen sowie gegebenenfalls auch größeren Ettringitkristallen schon frühzeitig eine ausgeprägte Aushärtung erreicht wird. Ohne die Durchtrocknungs- und Aushärtungsbeschleuniger wird vermutet, erneut ohne an eine Theorie gebunden zu sein, dass die spontan beim Vermengen von Zement mit Wasser gebildeten Ettringitkristalle beim mechanischen Vermischen zerstört werden. Um diesen Prozess abzumildern, gibt man üblicherweise mehr Wasser hinzu, was wiederum einer zügigen Durchtrocknung und Aushärtung entgegenwirkt.

Geeignete Durchtrocknungs- und Aushärtungsbeschleuniger für die erfindungsgemäßen Trockenmörtelvorprodukte oder die erfindungsgemäßen Trockenmörtel können dabei ausgewählt werden aus der Gruppe bestehend aus Lignosulfonaten, Cellulosederivaten, Hydroxycarbonsäuren, Salzen von Hydroxycarbonsäuren, sulfonierten Hydroxycarbonsäuren, insbesondere α-Sulfoglykolsäure, Salzen von sulfonierten Hydroxycarbonsäuren, insbesondere Salze der α-Sulfoglykolsäure, z.B. Dinatrium-α-sulfoglykolat, Gluconaten und deren beliebigen Mischungen, insbesondere Natriumgluconat. Unter den geeigneten Durchtrocknungs- und Aushärtungsbeschleunigermischungen wird bevorzugt zurückgegriffen auf Mischungen, enthaltend DA-1) anorganische Carbonate, insbesondere Natriumhydrogencarbonat und/oder Natriumcarbonat, DA-2) Gluconsäure und/oder ein Salz der Gluconsäure, insbesondere Natriumgluconat, und/oder, insbesondere oder, Salze der α-Sulfoglykolsäure, insbesondere Dinatrium-α-sulfoglykolat, und DA-3) Trialkanolamin und/oder Trialkanolaminhydrochlorid, insbesondere Triethanolamin und/oder Triethanolaminhydrochlorid, sowie gegebenenfalls DA-4) ein Polyol, insbesondere Glycerin. Ferner kann die Durchtrocknungs- und Aushärtungsbeschleunigermischung, bevorzugt zusätzlich, DA-5) ein Kondensations- oder Additionsprodukt von Glyoxylsäure oder deren Salzen und/oder ein Glyoxyl-Mono- und/oder Glyoxyl-Bis(bisulfit)-Addukt oder deren Alkali- oder Erdalkalimetallsalze oder eine Mischung der genannten Substanzen enthalten. Dabei handelt es sich bei dem Kondensationsprodukt von Glyoxylsäure oder deren Salzen bevorzugt um ein Amin-Glyoxylsäure-Kondensat, insbesondere ausgewählt aus der Gruppe bestehend aus einem Melamin-Glyoxylsäure-Kondensat, einem Harnstoff-Glyoxylsäure-Kondensat, einem Melamin-Harnstoff-Glyoxylsäure-Kondensat und einem Polyacrylamid-Glyoxylsäure-Kondensat, besonders bevorzugt um ein Harnstoff-Glyoxylsäure-Kondensat, z.B. ein Polykondensat aus Harnstoff und Glyoxylsäure.

Unter den bevorzugten Durchtrocknungs- und Aushärtungsbeschleunigermischungen kann zurückgegriffen werden auf Mischungen, enthaltend DA-1) anorganische Carbonate, insbesondere Natriumhydrogencarbonat und/oder Natriumcarbonat, DA-2) Gluconsäure und/oder ein Salz der Gluconsäure, insbesondere Natriumgluconat, und/oder, insbesondere oder, Salze der α-Sulfoglykolsäure, insbesondere Dinatrium-α-sulfoglykolat, DA-3) Trialkanolamin und/oder Trialkanolaminhydrochlorid, insbesondere Triethanolamin und/oder Triethanolaminhydrochlorid, und DA-4) ein Polyol, insbesondere Glycerin, sowie gegebenenfalls DA-5) ein Amin-Glyoxylsäure-Kondensat, insbesondere ausgewählt aus der Gruppe bestehend aus einem Melamin-Glyoxylsäure-Kondensat, einem Harnstoff-Glyoxylsäure-Kondensat, einem Melamin-Harnstoff-Glyoxylsäure-Kondensat und einem Polyacrylamid-Glyoxylsäure-Kondensat, besonders bevorzugt ein Harnstoff-Glyoxylsäure-Kondensat, z.B. ein Polykondensat aus Harnstoff und Glyoxylsäure.

Unter den besonders bevorzugten Durchtrocknungs- und Aushärtungsbeschleunigermischungen kann zurückgegriffen werden auf Mischungen, enthaltend DA-1) Natriumhydrogencarbonat und/oder Natriumcarbonat, DA-2) ein Salz der Gluconsäure, insbesondere Natriumgluconat, und/oder, insbesondere oder, Salze der α-Sulfoglykolsäure, insbesondere Dinatrium-α-sulfoglykolat, DA-3) Triethanolamin und/oder Triethanolaminhydrochlorid, DA-4) ein Polyol, insbesondere Glycerin, sowie DA-5) ein Amin-Glyoxylsäure-Kondensat ausgewählt aus der Gruppe bestehend aus einem Melamin-Glyoxylsäure-Kondensat, einem Harnstoff-Glyoxylsäure-Kondensat, einem Melamin-Harnstoff-Glyoxylsäure-Kondensat und einem Polyacrylamid-Glyoxylsäure-Kondensat, besonders bevorzugt ein Harnstoff-Glyoxylsäure-Kondensat, z.B. ein Polykondensat aus Harnstoff und Glyoxylsäure, oder auch auf Mischungen, enthaltend DA-1) Natriumhydrogencarbonat und/oder Natriumcarbonat, DA-2) ein Salz der Gluconsäure, insbesondere Natriumgluconat, DA-3) Triethanolamin und/oder Triethanolaminhydrochlorid, DA-4) Glycerin sowie DA-5) ein Amin-Glyoxylsäure-Kondensat ausgewählt aus der Gruppe bestehend aus einem Melamin-Glyoxylsäure-Kondensat, einem Harnstoff-Glyoxylsäure-Kondensat, einem Melamin-Harnstoff-Glyoxylsäure-Kondensat und einem Polyacrylamid-Glyoxylsäure-Kondensat, besonders bevorzugt ein Harnstoff-Glyoxylsäure-Kondensat, z.B. ein Polykondensat aus Harnstoff und Glyoxylsäure.

Geeignete erfindungsgemäße Trockenmörtelvorprodukte sowie geeignete erfindungsgemäße Trockenmörtel können in einigen Ausführungsformen ferner mindestens ein organisches Fasermaterial, insbesondere Polyolefin- und/oder Cellulosefasern, und/oder anorganisches Fasermaterial, insbesondere Mineral- und/oder Glasfasern, enthalten. Besonders geeignete Mineralfasern umfassen Steinwollfasern.

Das mindestens eine Additiv der erfindungsgemäßen Trockenmörtelvorprodukte bzw. der erfindungsgemäßen Trockenmörtel kann insbesondere ausgewählt werden aus der Gruppe bestehend aus Entschäumern, Stabilisatoren, pH-Einstellmitteln, Dispergiermitteln, Netzmitteln, Luftporenbildner, Verarbeitungshilfsmittel, bevorzugt Kaolin und besonders bevorzugt Kaolinit, und beliebigen Mischungen hiervon.

Ferner können das erfindungsgemäße Trockenmörtelvorprodukt oder der erfindungsgemäße Trockenmörtel mindestens ein Pigment enthalten. Dies kann dabei insbesondere ausgewählt sein aus der Gruppe bestehend aus anorganischen Bunt-, Schwarz- und Weißpigmenten, Glanzpigmenten, organischen Bunt- und Schwarzpigmenten sowie deren beliebigen Mischungen.

Unter den geeigneten Füllstoffen können silikatische Füllstoffe, insbesondere Quarzsand und/oder Quarzmehl, und/oder calcitische Füllstoffe, insbesondere carbonatische Füllstoffe wie Calciumcarbonat, z.B. Kalksteinbrechsand und/oder Kalksteinmehl, eingesetzt werden. Alternativ oder zusätzlich zu den Füllstoffen können die erfindungsgemäßen Trockenmörtel Vorprodukte bzw. die erfindungsgemäßen Trockenmörtel auch Leichtfüllstoffe enthalten. Besonders geeignete Leichtfüllstoffe können dabei ausgewählt werden aus der Gruppe bestehend aus Glasbubbles, Blähglas, z.B. Blähglasgranulat, geblähten vulkanischen Gesteinen, insbesondere Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln, polymeren Hohlkörpern und beliebigen Mischungen der genannten Leichtfüllstoffe.

Leichtfüllstoffe im Sinne der vorliegenden Erfindung unterscheiden sich von Füllstoffen im Sinne der Erfindung, dadurch, dass Letztere über eine Schüttdichte größer 600 g/l verfügen und dass Erstere eine Schüttdichte kleiner oder gleich 600 g/l, insbesondere kleiner 500 g/l, sowie besonders bevorzugt im Bereich von 50 bis 500 g/l, aufweisen. Die Schüttdichte von Leichtfüllstoffen kann gemäß dem Fachbuch "Füllstoffe", 2. Aufl. (dort Seiten 75 und 76), von Detlef Gysau mit Hilfe der Norm ISO 697:1984-01 ermittelt werden. Die Schüttdichte berechnet sich dabei regelmäßig aus dem Quotienten aus der Masse und dem eingenommenen Volumen, das Zwischenräume und mögliche Hohlräume durch Poren einschließt. Indem man zusätzlich die genannten Leichtfüllstoffe in die erfindungsgemäße Beschichtungsmasse einarbeitet, wird diese beim Aufrühren nochmals voluminöser.

Solche erfindungsgemäßen Trockenmörtelvorprodukte bzw. erfindungsgemäßen Trockenmörtel sind besonders bevorzugt, bei denen der silikatische Füllstoff oder der calcitische Füllstoff eine multimodale, insbesondere bi- oder trimodale, Teilchengrößenverteilung aufweist.

Auch wird bevorzugt auf solche Füllstoffe, insbesondere silikatische Füllstoffe, zurückgegriffen, die einen D50-Wert im Bereich von 200 bis 1200 µm, ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) aufweisen.

Die geeigneten Füllstoffe, insbesondere die silikatischen Füllstoffe, können alternativ sowie insbesondere zusätzlich einen D10-Wert im Bereich von 100 bis 800 µm und/oder einen D90-Wert im Bereich von 400 bis 1500 µm aufweisen, jeweils ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteil ungen).

Alternativ oder insbesondere zusätzlich können die erfindungsgemäßen Trockenmörtel auch einen Füllstoff in Form eines Strukturkorns, vorzugsweise mit einer durchschnittlichen Teilchengröße im Bereich von 1 bis 6 mm, besonders bevorzugt im Bereich von 2 bis 4 mm, aufweisen.

Die der Erfindung zugrunde liegende Aufgabe wird des Weiteren gelöst durch eine wässrige Beschichtungsmasse, enthaltend einen erfindungsgemäßen Trockenmörtel und Wasser.

Bei der erfindungsgemäßen Beschichtungsmasse handelt es sich bevorzugt um eine Putzmasse, eine Klebemasse und/oder eine Armierungsmasse, insbesondere Klebe- oder eine Armierungsmasse. Die erfindungsgemäßen Beschichtungsmassen eignen sich insbesondere auch für die Spritzapplikation auf Substratoberflächen, insbesondere auf Gebäudewänden. Die erfindungsgemäßen Beschichtungsmassen können selbstverständlich auch mittels üblicher Hilfsmittel wie Kelle oder dergleichen aufgetragen werden.

Ferner wird die der Erfindung zugrunde liegende Aufgabe gelöst durch eine Beschichtung, erhalten oder erhältlich durch Aufbringen der erfindungsgemäßen Beschichtungsmasse auf einer Substratoberfläche. Die erfindungsgemäße Beschichtung kann dabei vorzugsweise mit einem Armierungsgewebe ausgestattet sein. Dieses liegt bevorzugt eingebettet in der Beschichtung vor.

Darüber hinaus wird die der Erfindung zugrundeliegende Aufgabe gelöst durch ein Wärmedämmverbundsystem, enthaltend mindestens eine Wärmedämmschicht mit einer Substratoberfläche und eine erfindungsgemäße Beschichtung an der Substratoberfläche.

Die erfindungsgemäßen Beschichtungsmassen eignen sich demzufolge insbesondere als Klebe- und/oder Armierungsmassen.

Mit der vorliegenden Erfindung wurde überraschend gefunden, dass sich aus den erfindungsgemäßen Trockenmörtelvorprodukten bzw. Trockenmörteln wässrige Beschichtungsmassen erhalten lassen, die kontrolliert und zügig aushärten, ohne dass dabei Einbußen bei den Verarbeitungseigenschaften in Kauf genommen werden müssen. Das Aushärteverhalten der erfindungsgemäßen Beschichtungsmassen lässt sich zum Beispiel mithilfe von intervallweisen Schallgeschwindigkeitsmessungen ermitteln. Beim Aushärten treten Gefügeveränderungen auf, die einen signifikanten Effekt auf die Schallgeschwindigkeit im Probekörper haben. Dies ist dem Fachmann bekannt. Für die Ermittlung der Erstarrungszeiten, insbesondere Beginn und Ende der Ansteifung, kann auch auf Vicat-Messungen gemäß DIN EN 196-3 (Fassung 09/2009) zurückgegriffen werden. Auch dies ist dem Fachmann bekannt.

Insbesondere eignen sich die erfindungsgemäßen Trockenmörtelvorprodukte bzw. Trockenmörtel sowie die erfindungsgemäßen Beschichtungsmassen für die industrielle Vorfertigung von Gebäudekomponenten, beispielsweise beim Fertighausbau. Von besonderem Vorteil ist auch, dass der Abbindeprozess hinsichtlich Temperatur und Lagerung deutlich stabiler ist als bei herkömmlichen Systemen. Insbesondere zeichnen sich die erfindungsgemäßen Beschichtungsmassen dadurch aus, dass sie bereits innerhalb sehr kurzer Zeit, beispielsweise innerhalb von ein bis zwei Stunden Beschichtungen bzw. Formkörper mit sehr hoher mechanischer Festigkeit liefern. Hierbei ist von besonderem Vorteil, dass die Durchtrocknung der aus den erfindungsgemäßen Beschichtungsmassen erhaltenen Beschichtungen bereits innerhalb sehr kurzer Zeiträume, beispielsweise innerhalb von nur sieben Stunden, im Wesentlichen abgeschlossen ist.

### Beispiel:

Nachfolgend wird die Erfindung anhand eines Beispiels erläutert, das gleichwohl den Gegenstand der Erfindung nicht beschränkt, sondern rein illustrativen Charakter hat.

In der nachfolgenden Tabelle 1 werden ein erfindungsgemäßer Trockenmörtel (Bsp. 1) sowie ein Vergleichsbeispiel (Bsp. 2) angegeben. Die darin zu findenden Zahlenangaben stellen Gewichtsprozentangaben der Feststoff- bzw., sofern bei Raumtemperatur (20 °C) flüssig, Wirkstoffanteile dar.

| Tabelle 1 | | |
|---|---|---|
| **Komponenten (Gew.-%)** | **Bsp. 1** | **Bsp. 2** |
| Zement | 23,0 | 23,0 |
| Ca(OH)₂ | 8,0 | 8,0 |
| Anhydrit | 2,01 | - |
| polymeres organisches Bindemittel in Form eines Dispersionspulvers | 2,5 | 2,5 |
| Hydrophobierungsmittel | 0,3 | 0,3 |
| Kaolinit | 0,5 | 0,5 |
| Fasermaterial | 1,0 | 1,0 |
| Durchtrocknungs- und Aushärtungsbeschleunigermischung | 0,8 | - |
| Verdicker | 0,47 | 0,47 |
| Füllstoffe | 52,42 | 55,23 |
| Leichtfüllstoffe | 9,0 | 9,0 |
| Total | 100 | 100 |

300 g der Trockenmörtelprobe gemäß Bsp. 1 und Bsp. 2 wurden jeweils mit 114 ml bzw. 120 ml Wasser in einem becherförmigen Gebinde zu einer verarbeitbaren Konsistenz angerührt. Im Anschluss hieran wurde sogleich mit den Messungen des Abbinde- und Aushärtungsverhaltens begonnen.

Über intervallweise Schallgeschwindigkeitsmessungen konnten die während der Erhärtung auf Abbindeprozesse zurückgehenden Gefügeveränderungen ermittelt werden. Konkret wurde hierbei regelmäßig die Laufzeit von Ultraschallimpulsen gemessen. Trägt man die jeweils ermittelte Schallgeschwindigkeit in Abhängigkeit von der Hydratationszeit auf, ergeben sich charakteristische Kurvenverläufe. Im vorliegenden Fall wurde die Messung der Schallgeschwindigkeit bzw. -laufzeit mit dem IP-8 V4 Ultraschall-Messsystem der Firma UltraTest GmbH (Versionsjahr 2017) durchgeführt. Die Messintervalle betrugen 1 min bei einer Probenkörpermessstrecke von 40 mm. Die Temperatur betrug konstant 23°C, und die relative Luftfeuchte wurde konstant bei 50% gehalten.

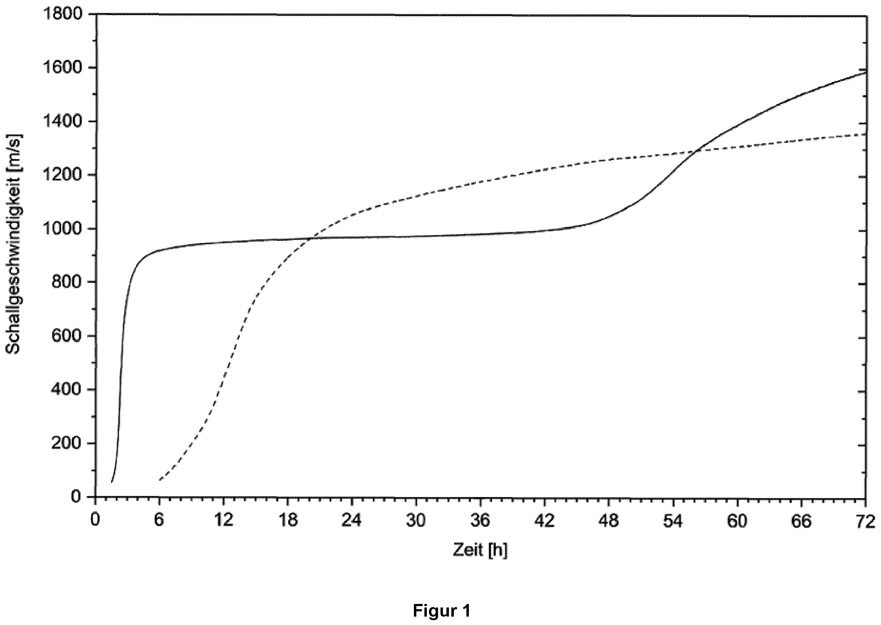

Figur 1 zeigt den Verlauf der Schallgeschwindigkeiten in Abhängigkeit von der Hydratationszeit für die Probenkörper erhalten aus den Trockenmörtelproben wie vorangehend beschrieben. Die aus der Trockenmörtelprobe gemäß Bsp. 1 erhaltene wässrige Beschichtungsmasse (durchgezogene Linie) lieferte einen Probenkörper, der bei 20 °C innerhalb von nur etwa 2 bis 3 Stunden ausgehärtet vorlag und der innerhalb von etwa 5 bis 6 Stunden durchgetrocknet war und sich durch eine ausgeprägte Festigkeit auszeichnete. Demgegenüber setzte die Aushärtung beim Probenkörper aus der Trockenmörtelprobe gemäß Bsp. 2 (gestrichelte Linie) erst viel später ein, auch die Aushärtung selber verlief um ein Vielfaches langsamer. Dies wird durch die in der nachfolgenden Tabelle 2 wiedergegebene Schallgeschwindigkeitsmessung und Erstarrungszeit belegt. Es werden die Schallgeschwindigkeit, der Aushärtungsgrad sowie die hierzu jeweils korrespondierenden Hydratationszeiten angegeben, bei denen der Anstieg der Schallgeschwindigkeit bzw. des Aushärtungsgrads ein Plateau erreichte und für einen Zeitraum von mehreren Stunden im Wesentlichen konstant blieb oder nur noch sehr geringfügig anstieg.

| Tabelle 2 | **Bsp. 1** | **Bsp. 2** |
|---|---|---|
| **Schallgeschwindigkeit** | 5 h / 900 m/s | 18 h / 900 m/s |
| **Erhärtung** | 2,5 h / 98 % | 12 h / 95 % |

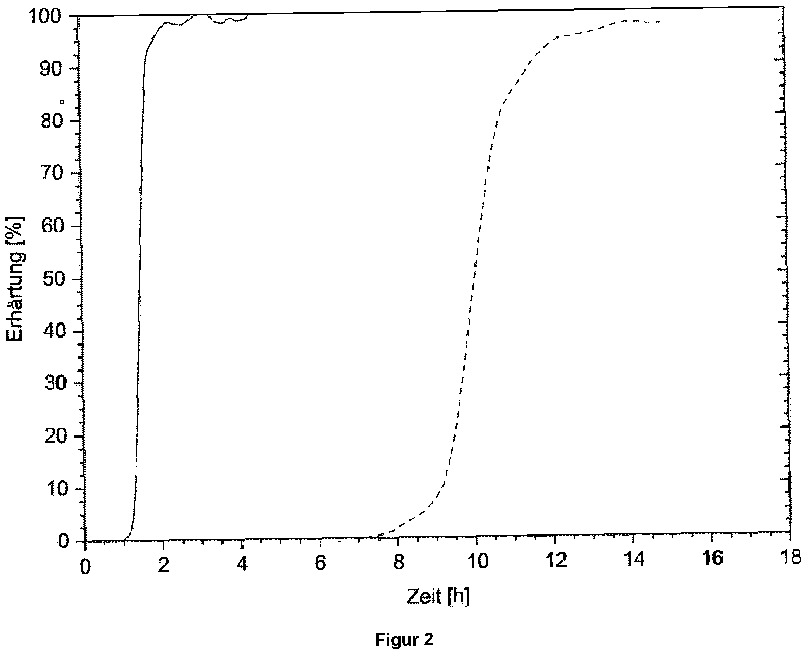

Die Bestimmung der Erstarrungszeit ("Vicat-Messungen") wurde gemäß DIN EN 196-3 (Fassung 09/2009) durchgeführt. Eingesetzt wurde ein automatisches Vicat-Nadelgerät der Firma RatioTEC Prüfsysteme GmbH (Versionsjahr 2015). Als Eindringkörper wurde eine Stahlnadel mit einem Durchmesser von 1,13 mm und einem Prüfgewicht von 300 g verwendet. Die Messintervalle betrugen 3 min (15 s Eintauchzeit + 165 s Haltezeit). Alle Messungen wurden bei Raumtemperatur (20 °C) durchgeführt. Zwecks Vergleichbarkeit der Messergebnisse wurden die Eindringtiefen der Stahlnadeln normiert. Wenn die Stahlnadel nicht mehr in die Oberfläche des Mörtels eindringen konnte, wurde hierfür eine Erhärtung von 100 % angesetzt. 0% Erhärtung entsprachen einer Eindringtiefe bis zum unteren Anschlag des Messgerätes. Figur 2 zeigt den Verlauf der Erhärtung in Abhängigkeit von der Hydratationszeit für Probenkörper erhalten aus den Trockenmörtelzusammensetzungen gemäß den Beispielen 1 (durchgezogene Linie) und 2 (gestrichelte Linie). Die über die Vicat-Messungen erhaltenen Ergebnisse korrelieren mit den Schallgeschwindigkeitsmessungen und belegen den Effekt, der auf die kombinierte Verwendung einer Calciumsulfat-Spezies, hier Calciumsulfat-Anhydrit, und eines Durchtrocknungs- und Aushärtungsbeschleunigers oder einer Durchtrocknungs- und Aushärtungsbeschleunigermischung zurückgeht.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Trockenmörtelvorprodukt, enthaltend oder bestehend aus
a) 15 bis 95 Gewichtsprozent, bevorzugt 20 bis 85 Gewichtsprozent und besonders bevorzugt 40 bis 75 Gewichtsprozent, Zement, insbesondere Zement gemäß DIN EN 197-1:2011-11,
b) 1 bis 20 Gewichtsprozent, bevorzugt 2 bis 15 Gewichtsprozent und besonders bevorzugt 3 bis 12 Gewichtsprozent, Calcium-Dihydrat, Calciumsulfat-Anhydrit und/oder Calciumsulfat-Hemihydrat, insbesondere Calciumsulfat-Anhydrit und/oder Calciumsulfat-Hemihydrat,
c) 4 bis 40 Gewichtsprozent, bevorzugt 6 bis 30 Gewichtsprozent und besonders bevorzugt 7 bis 25 Gewichtsprozent, Calciumhydroxid,
d) 0 bis 5 Gew. %, insbesondere 0,1 bis 2 Aluminiumhydroxid und/oder Calciumaluminatzement und/oder Calciumsulfoaluminatzement, insbesondere Aluminiumhydroxid,
e) 2 bis 20 Gewichtsprozent, bevorzugt 3 bis 15 Gewichtsprozent und besonders bevorzugt 4 bis 12 Gewichtsprozent, jeweils bezogen auf den Feststoffanteil, an mindestens einem polymeren organischen Bindemittel,
f) 0,1 bis 4,0 Gewichtsprozent, bevorzugt 0,2 bis 3,0 Gewichtsprozent und besonders bevorzugt 0,3 bis 2,0 Gewichtsprozent, an mindestens einem Verdicker, insbesondere Celluloseether-Verdicker,
g) 0 bis 2,5 Gewichtsprozent, bevorzugt 0,1 bis 2,0 Gewichtsprozent und besonders bevorzugt 0,2 bis 1,5 Gewichtsprozent, an mindestens einem Hydrophobierungsmittel und
h) 0,5 bis 6,0 Gewichtsprozent, bevorzugt 1,0 bis 5,0 Gewichtsprozent und besonders bevorzugt 1,2 bis 4,5 Gewichtsprozent, an einem Durchtrocknungs- und Aushärtungsbeschleuniger oder einer Durchtrocknungs- und Aushärtungsbeschleunigermischung,
wobei die das Trockenmörtelvorprodukt bildenden Komponenten stets 100,0 Gewichtsprozent ergeben.

2. Trockenmörtelvorprodukt nach Anspruch 1, **dadurch gekennzeichnet, dass** dieses im Wesentlichen keine, insbesondere keine, silikatischen Füllstoffe, insbesondere im Wesentlichen keine Füllstoffe und im Wesentlichen keine Leichtfüllstoffe oder keine Füllstoffe und keine Leichtfüllstoffe enthält.

3. Trockenmörtel, bestehend aus oder enthaltend
a) 5 bis 40 Gewichtsprozent, bevorzugt 10 bis 30 Gewichtsprozent und besonders bevorzugt 12 bis 28 Gewichtsprozent, Zement, insbesondere Zement gemäß DIN EN 197-1:2011-11,
b) 0,5 bis 5,0 Gewichtsprozent, bevorzugt 0,75 bis 4,0 Gewichtsprozent und besonders bevorzugt 1,0 bis 3,0 Gewichtsprozent, Calciumsulfat-Dihydrat, Calciumsulfat-Anhydrit und/oder Calciumsulfat-Hemihydrat, insbesondere Calciumsulfat-Anhydrit und/oder Calciumsulfat-Hemihydrat,
c) 0,5 bis 14 Gewichtsprozent, bevorzugt 1,0 bis 12 Gewichtsprozent und besonders bevorzugt 2,0 bis 10 Gewichtsprozent, Calciumhydroxid,
d) 0 bis 1 Gew.% bevorzugt 0,05 bis 0,5 Gew.% Aluminiumhydroxid und/oder Calciumaluminatzement und/oder Calciumsulfoaluminatzement, insbesondere Aluminiumhydroxid,
e) 0,5 bis 8,0 Gewichtsprozent, bevorzugt 1,0 bis 6,0 Gewichtsprozent und besonders bevorzugt 1,5 bis 5,0 Gewichtsprozent, jeweils bezogen auf den Feststoffanteil, an mindestens einem polymeren organischen Bindemittel,
f) 0,01 bis 1,2 Gewichtsprozent, bevorzugt 0,05 bis 1,0 Gewichtsprozent und besonders bevorzugt 0,1 bis 0,8 Gewichtsprozent, an mindestens einem Verdicker, insbesondere Celluloseether-Verdicker,
g) 0 bis 1,0 Gewichtsprozent, bevorzugt, 0,04 bis 0,75 Gewichtsprozent und besonders bevorzugt 0,08 bis 0,60 Gewichtsprozent, an mindestens einem Hydrophobierungsmittel,
h) 0,1 bis 2,0 Gewichtsprozent, bevorzugt 0,2 bis 1,5 Gewichtsprozent und besonders bevorzugt 0,5 bis 1,2 Gewichtsprozent, an einem Durchtrocknungs- und Aushärtungsbeschleuniger oder einer Durchtrocknungs- und Aushärtungsbeschleunigermischung und
i) 35 bis 80 Gewichtsprozent, bevorzugt 40 bis 78 Gewichtsprozent und besonders bevorzugt 45 bis 75 Gewichtsprozent, an mindestens einem Füllstoff sowie
j) 0 bis 20 Gewichtsprozent, bevorzugt 3 bis 15 Gewichtsprozent und besonders bevorzugt 5 bis 12 Gewichtsprozent, an mindestens einem Leichtfüllstoff,
wobei die den Trockenmörtel bildenden Komponenten stets 100,0 Gewichtsprozent ergeben.

4. Trockenmörtelvorprodukt nach Anspruch 1 oder 2 oder Trockenmörtel nach Anspruch 3, **dadurch gekennzeichnet, dass**
der Zement Portlandzement der Festigkeitsklasse CEM I 42,5 oder CEM I 52,5, jeweils gemäß DIN EN 197-1:2011-11, insbesondere Portlandzement vom N-Typ oder vom R-Typ, jeweils gemäß DIN EN 197-1:2011-11, umfasst oder darstellt.

5. Trockenmörtelvorprodukt nach einem der Ansprüche 1, 2 oder 4 oder Trockenmörtel nach Anspruch 3 oder 4, **dadurch gekennzeichnet, dass** das Hydroxid der Komponente c) Calciumhydroxid umfasst.

6. Trockenmörtelvorprodukt nach einem der Ansprüche 1, 2, 4 oder 5 oder Trockenmörtel nach einem der Ansprüche 3 bis 5, **dadurch gekennzeichnet, dass** das polymere organische Bindemittel ein Bindemittel auf, insbesondere hydrophobierter, Pulverbasis oder auf wässriger Dispersionsbasis darstellt, insbesondere ausgewählt ist aus der Gruppe bestehend aus Vinylacetat-Copolymeren, inbesondere Vinylacetat/Ethylen-Copolymeren, Vinylversatat/Ethylen-Copolymeren und/oder Vinylacetat/Ethylen/Vinylversatat-Copolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, Hybridbindemitteln, insbesondere in Form wässriger Organosilikat-Hybriddispersionen, und beliebigen Mischungen hiervon, wobei
das polymere organische Bindemittel bevorzugt Vinylacetat/Ethylen-Copolymere und/oder Vinylversatat/Ethylen-Copolymere, und besonders bevorzugt Vinylacetat/Ethylen-Copolymere, umfasst oder hieraus besteht.

7. Trockenmörtelvorprodukt nach einem der Ansprüche 1, 2, 4 bis 6 oder Trockenmörtel nach einem der Ansprüche 3 bis 6, **dadurch gekennzeichnet, dass** der Verdicker einen Celluloseether-Verdicker umfasst oder hieraus besteht, insbesondere ausgewählt aus der Gruppe bestehend aus Hydroxypropylmethylcellulose, Methylcellulose, Hydroxyethylcellulose, Carboxymethylcellulose, Methylhydroxyethylcellulose, Methylhydroxypropylcellulose und deren beliebigen Mischungen, insbesondere Methylhydroxyethylcellulose und/oder Methylhydroxypropylcellulose.

8. Trockenmörtelvorprodukt nach einem der Ansprüche 1, 2, 4 bis 7 oder Trockenmörtel nach einem der Ansprüche 3 bis 7, **dadurch gekennzeichnet, dass** der Durchtrocknungs- und Aushärtungsbeschleuniger ausgewählt ist aus der Gruppe bestehend aus Lignosulfonaten, Cellulosederivaten, Hydroxycarbonsäuren, Salzen von Hydroxycarbonsäuren, sulfonierten Hydroxycarbonsäuren, insbesondere α-Sulfoglykolsäure, Salzen von sulfonierten Hydroxycarbonsäuren, insbesondere Salzen der α-Sulfoglykolsäure, Gluconaten und deren beliebigen Mischungen, insbesondere Natriumgluconat, oder dass
die Durchtrocknungs- und Aushärtungsbeschleunigermischung DA-1) anorganische Carbonate, insbesondere Natriumhydrogencarbonat und/oder Natriumcarbonat, DA-2) Gluconsäure und/oder ein Salz der Gluconsäure, insbesondere Natriumgluconat, und DA-3) Trialkanolamin und/oder Trialkanolaminhydrochlorid, insbesondere Triethanolamin und/oder Triethanolaminhydrochlorid, sowie gegebenenfalls DA-4) ein Polyol, insbesondere Glycerin, umfasst.

9. Trockenmörtelvorprodukt nach einem der Ansprüche 1, 2, 4 bis 8 oder Trockenmörtel nach einem der Ansprüche 3 bis 8, **dadurch gekennzeichnet, dass** die Durchtrocknungs- und Aushärtungsbeschleunigermischung ferner DA-5) ein Kondensations- oder Additionsprodukt von Glyoxylsäure oder deren Salzen und/oder ein Glyoxyl-Mono- und/oder Glyoxyl-Bis(bisulfit)-Addukt oder deren Alkali- oder Erdalkalimetallsalze oder eine Mischung der genannten Substanzen enthält.

10. Trockenmörtelvorprodukt nach Anspruch 9 oder Trockenmörtel nach Anspruch 9, gekennzeichnet, dass
das Kondensationsprodukt von Glyoxylsäure oder deren Salzen ein Amin-Glyoxylsäure-Kondensat darstellt, insbesondere ausgewählt aus der Gruppe bestehend aus einem Melamin-Glyoxylsäure-Kondensat, einem Harnstoff-Glyoxylsäure-Kondensat, einem Melamin-Harnstoff-Glyoxylsäure-Kondensat und einem Polyacrylamid-Glyoxylsäure-Kondensat, besonders bevorzugt ein Harnstoff-Glyoxylsäure-Kondensat.

11. Trockenmörtelvorprodukt nach einem der Ansprüche 1, 2, 4 bis 10 oder Trockenmörtel nach einem der Ansprüche 3 bis 10, ferner umfassend mindestens ein Additiv, insbesondere ausgewählt aus der Gruppe bestehend aus Entschäumern, Stabilisatoren, pH-Einstellmitteln, Dispergiermitteln, Netzmitteln, Luftporenbildner, Verarbeitungshilfsmittel, bevorzugt Kaolin und besonders bevorzugt Kaolinit, und beliebigen Mischungen hiervon.

12. Trockenmörtelvorprodukt nach einem der Ansprüche 1, 2, 4 bis 11 oder Trockenmörtel nach einem der Ansprüche 3 bis 11, ferner umfassend mindestens ein Pigment, insbesondere ausgewählt aus der Gruppe bestehend aus anorganischen Bunt-, Schwarz- und Weißpigmenten, Glanzpigmenten, organischen Bunt- und Schwarzpigmenten sowie deren beliebigen Mischungen.

13. Trockenmörtel nach einem der Ansprüche 3 bis 12, **dadurch gekennzeichnet, dass** der Füllstoff mindestens einen silikatischen Füllstoff, insbesondere Quarzsand und/oder Quarzmehl, und/oder mindestens einen calcitischen Füllstoff, insbesondere Calciumcarbonat, z.B. Kalksteinbrechsand und/oder Kalksteinmehl, umfasst und/oder dass
der Leichtfüllstoff ausgewählt ist aus der Gruppe bestehend aus Glasbubbles, Blähglas, z.B. Blähglasgranulat, geblähten vulkanischen Gesteinen, insbesondere Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln, polymeren Hohlkörpern und beliebigen Mischungen der genannten Leichtfüllstoffe.

14. Wässrige Beschichtungsmasse, gebildet aus oder enthaltend
einen Trockenmörtel gemäß einem der Ansprüche 3 bis 13 und Wasser.

15. Beschichtungsmasse nach Anspruch 14, **dadurch gekennzeichnet, dass**
diese eine Putzmasse, eine Klebemasse und/oder eine Armierungsmasse, insbesondere Klebe- oder eine Armierungsmasse, darstellt.

16. Beschichtung, erhalten oder erhältlich durch Aufbringen der Beschichtungsmasse nach Anspruch 14 oder 15 auf einer Substratoberfläche.

17. Beschichtung nach Anspruch 16, ferner enthaltend
ein Armierungsgewebe.

18. Beschichtetes Substrat, erhalten durch
Behandeln eines Substrats mit der wässrigen Beschichtungsmasse nach Anspruch 14 oder 15.

19. Beschichtetes Substrat nach Anspruch 18, **dadurch gekennzeichnet, dass** dieses ein Wärmedämmverbundsystem darstellt oder umfasst, enthaltend mindestens eine Wärmedämmschicht mit einer Substratoberfläche und eine Beschichtung nach Anspruch 16 oder 17 an der Substratoberfläche.

20. Verwendung des Trockenmörtelvorprodukts nach einem der Ansprüche 1, 2, 4 bis 12 oder des Trockenmörtels nach einem der Ansprüche 3 bis 13 oder der Beschichtungsmasse nach Anspruch 14 oder 15 als Klebe- und/oder Armierungsmasse oder für die Herstellung von Fertighäusern oder von Bestandteilen hiervon.

21. Verwendung der Beschichtungsmasse nach Anspruch 14 oder 15 für die Spritzapplikation auf Substratoberflächen, insbesondere auf Gebäudewänden.
